# EUROPÄISCHE PATENTANMELDUNG

(11) **EP 3 670 676 A1**
(43) Veröffentlichungstag der Anmeldung: **24.06.2020**
(21) Anmeldenummer: 18213141.7
(22) Anmeldetag: 17.12.2018
(51) Int. Cl.: C21B 13/00

(54) **VERFAHREN UND VORRICHTUNG ZUR DIREKTREDUKTION MIT ELEKTRISCH AUFGEHEIZTEM REDUKTIONSGAS**

(71) Anmelder: Primetals Technologies Austria GmbH, 4031 Linz (AT)
(72) Erfinder: Hauzenberger, Franz, 4030 Linz (AT); Millner, Robert, 3382 Loosdorf (AT); Rein, Norbert, 1060 Wien (AT); Rosenfellner, Gerald, 3355 Ertl (AT); Ofner, Hanspeter, 4055 Pucking (AT); Wurm, Johann, 4283 Bad Zell (AT)
(74) Vertreter: Metals@Linz

(57) **Zusammenfassung**

Verfahren zur Direktreduktion von Metalloxiden (2) unter Verwendung eines Reduktionsgases,
das auf zumindest einem Vorläufergas basiert, wobei zumindest ein Vorläufergas (15,22)
auf durch katalytische Reformierung von kohlenwasserstoffhaltigem Gas (4) in einem Reformer (3) erhaltenem Reformergas basiert, und bei der Zubereitung des Reduktionsgases zumindest ein Vorläufergas mittels elektrischer Energie aufgeheizt wird.

Eine Vorrichtung zur Direktreduktion (1) von Metalloxiden (2) mittels eines Reduktionsgases umfasst einen katalytischen Reformer (3) zur Herstellung eines Reformergases, eine Reformergasleitung (5) zur Ausleitung von Reformergas aus dem katalytischen Reformer (3), ein Reduktionsaggregat (9), eine Reduktionsgasleitung (8) zur Einleitung von Reduktionsgas in das Reduktionsaggregat (9), und zumindest eine Vorläufergasleitung (6,6',6",6"'), wobei zumindest eine Vorläufergasleitung (6,6',6",6"') eine elektrische Gasheizvorrichtung (7,10,17) umfasst, und zumindest eine Vorläufergasleitung (6,6',6",6"') von der Reformergasleitung (5) ausgeht, und jede Vorläufergasleitung (6,6',6",6"') in die Reduktionsgasleitung (8) mündet.

## Beschreibung

### Gebiet der Technik

Die Erfindung betrifft ein Verfahren zur Direktreduktion von Metalloxiden unter Verwendung eines Reduktionsgases, das auf zumindest einem Vorläufergas basiert, wobei zumindest ein Vorläufergas auf durch katalytische Reformierung von kohlenwasserstoffhaltigem Gas in einem Reformer erhaltenem Reformergas basiert. Sie betrifft auch eine Vorrichtung zur Direktreduktion von Metalloxiden mittels eines Reduktionsgases, umfassend einen katalytischen Reformer zur Herstellung eines Reformergases, eine Reformergasleitung zur Ausleitung von Reformergas aus dem katalytischen Reformer, ein Reduktionsaggregat, und eine Reduktionsgasleitung zur Einleitung von Reduktionsgas in das Reduktionsaggregat.

### Stand der Technik

Herstellung von Metallen mittels Direktreduktion von Metalloxiden durch ein mittels Reformierung von kohlenwasserstoffhaltigen Gasen hergestelltes Reduktionsgas ist bekannt - beispielsweise ist das MIDREX®-Verfahren zur Direktreduktion von Eisenoxiden wirtschaftlich sehr bedeutend. Das Reduktionsgas wird dabei zwecks Direktreduktion in einen mit dem Metalloxid befüllten Reduktionsschacht eingeleitet und reagiert beim Durchströmen mit der Füllung. Die Reaktionskinetik für die Reduktion ist bei höherer Temperatur des Reduktionsgases günstiger - um bei einer vergleichsweise tieferen Einleitungstemperatur des Reduktionsgases eine gewünschte Anlagenleistung zu erreichen, müsste bei einem gegebenem Reduktionsschacht die spezifische Reduktionsgasmenge und eventuell der Anlagendruck erhöht werden oder leichter reduzierbare Rohstoffe - beispielsweise Pellets - müssten verwendet werden, welche mit bedeutend höheren Kosten verbunden sind. Dem maximal einstellbaren Anlagendruck und der maximal einleitbaren spezifischen Reduktionsgasmenge sind jedoch Grenzen gesetzt, da ansonsten der Druckverlust zu hoch wird und zu einer Behinderung des Materialflußes führt. Zur Einstellung einer gewünschten Einleitungstemperatur muss von dem Temperaturniveau des den Reformer verlassenden Gases ausgegangen werden. Einer Steigerung dieses Temperaturniveaus sind jedoch Temperaturgrenzen des Reformers gesetzt.

Um die Produktionsleistung trotz solcher Randbedingungen von Reduktionsschacht und Reformer anheben zu können, werden oft zwischen Reformer und Reduktionsschacht Maßnahmen zur Erhöhung der Einleitungstemperatur durchgeführt. Beispielsweise ist es bekannt, durch Einbringung von Sauerstoff in den Gasstrom temperaturerhöhende Verbrennung von reduzierenden Bestandteilen einzuleiten. Das hat jedoch den Nachteil, dass die Reduktionskraft des eingeleiteten Reduktionsgases abnimmt, und sich der spezifische Energieverbrauch der Direktreduktion insgesamt erhöht. Temperaturerhöhung durch Verbrennung von zusätzlichem Erdgas mit Sauerstoff führt zwar zu einer gleichzeitigen Erhöhung der Reduktionsgasmenge, kann aber Probleme durch Veränderung der Reduktionsgaszusammensetzung, Rußbildung, ungünstige Gasströmungen verursachen, und muss genau kontrolliert werden.

### Zusammenfassung der Erfindung

### Technische Aufgabe

Es sollen ein Verfahren und eine Vorrichtung vorgestellt werden, die eine Erhöhung der Einleitungstemperatur und Steigerung der Produktionsleistung ohne die Nachteile bekannter Verfahren erlauben.

### Technische Lösung

Diese Aufgabe wird gelöst durch ein Verfahren zur Direktreduktion von Metalloxiden unter Verwendung eines Reduktionsgases, das auf zumindest einem Vorläufergas basiert, wobei zumindest ein Vorläufergas auf durch katalytische Reformierung von kohlenwasserstoffhaltigem Gas in einem Reformer erhaltenem Reformergas basiert,
dadurch gekennzeichnet, dass
bei der Zubereitung des Reduktionsgases zumindest ein Vorläufergas mittels elektrischer Energie aufgeheizt wird.

Reduktionsgas ist ein Gas, das in ein die zu reduzierenden Metalloxide enthaltendes Reduktionsaggregat - beispielsweise ein Reduktionsschacht oder ein Wirbelschichtaggregat - eingeleitet wird, um dort die Metalloxide zumindest teilweise zu reduzieren.
Ein Reduktionsgas, das auf zumindest einem Vorläufergas basiert, wobei zumindest ein Vorläufergas auf durch katalytische Reformierung von kohlenwasserstoffhaltigem Gas in einem Reformer erhaltenem Reformergas basiert,
und bei der Zubereitung des Reduktionsgases zumindest ein Vorläufergas mittels elektrischer Energie aufgeheizt wird, wird beispielsweise Reduktionsgas A genannt. Zur Direktreduktion kann entweder nur Reduktionsgas A verwendet werden, oder es können zusätzlich zu Reduktionsgas A noch ein weiteres Reduktionsgas oder mehrere weitere Reduktionsgase - auch genannt Zusatzreduktionsgase - verwendet werden - dabei müssen die für Reduktionsgas A genannten Bedingungen für die weiteren Reduktionsgase nicht gelten.

Als katalytische Reformierung bezeichnet man die Umsetzung von kohlenwasserstoffhältigen Stoffen, insbesondere Gasen, mit H₂O und CO₂ in Gegenwart eines Katalysators in einem katalytischen Reformer zur Herstellung von H₂- und COhaltigem Gas, welches im Rahmen dieser Anmeldung Reformergas genannt wird.

Die Metalloxide umfassen bevorzugterweise Eisenoxide, besonders bevorzugt sind sie Eisenoxide. Eisenoxide sind beispielsweise hämatitische oder magnetitische Erze, oder Agglomerate wie beispielsweise Eisenerzpellets.

Es wird unter Verwendung eines Reduktionsgases reduziert, das auf zumindest einem Vorläufergas basiert.
Bei der Zubereitung dieses Reduktionsgases wird zumindest ein Vorläufergas mittels elektrischer Energie aufgeheizt.

Vorläufergas kann beispielsweise
- ein durch katalytische Reformierung von kohlenwasserstoffhaltigem Gas in einem Reformer erhaltenes Reformergas,
- eine nicht reformierte Teilmenge eines für die Reformierung vorgesehenen kohlenwasserstoffhaltigen Gases,
- Wasserstoff H₂,
- Kohlenmonoxid CO,
- kohlenwasserstoffhaltige Gase, wie beispielsweise auf Basis LPG, PAH, BTEX, CH₄, CmHn, Erdgas, und/oder eine Mischung aus diesen Gasen,
- ein aus einem Reduktionsaggregat, in dem die Metalloxide reduziert werden, abgezogenes Topgas, oder aus dem bei Durchführung des erfindungsgemäßen Verfahrens aus dem Reduktionsaggregat, in dem die Metalloxide direktreduziert werden, abgezogenes Topgas,
- Inertgase, wie beispielsweise N₂, Ar,
sein,
oder eine Mischung aus mehreren dieser beispielhaft angeführten Gase, oder eine Mischung eines anderen Gases mit einem oder mehreren dieser beispielhaft angeführten Gase. Zumindest ein Vorläufergas enthält gegenüber Metalloxiden, bevorzugt Eisenoxiden, reduzierend wirkende Gaskomponenten, oder besteht aus solchen Gaskomponenten. Vorläufergase können aber auch gegenüber Metalloxiden inerte Gaskomponenten, oder aufkohlend wirkende Gaskomponenten enthalten oder aus solchen Gaskomponenten bestehen.

Zumindest ein Vorläufergas basiert auf dem Reformergas; es können auch mehrere Vorläufergase auf dem Reformergas basieren.

Das Reformergas ist das bei katalytischer Reformierung von kohlenwasserstoffhaltigem Gas - wie beispielsweise Erdgas, Methan, liquified natural gas LNG, liquified petroleum gas LPG, Koksofengas COG, Biogas; es kann ein reines Gas sein oder ein Gasgemisch - in einem Reformer erhaltene Produkt. Das auf dem Reformergas basierende Vorläufergas kann zumindest eine Teilmenge des Reformergases umfassen, es kann auch das gesamte Reformergas umfassen. Das auf dem Reformergas basierende Vorläufergas kann auch aus einer Teilmenge des Reformergases oder dem gesamten Reformergas bestehen. Das auf dem Reformergas basierende Vorläufergas kann auch durch Veränderung des Reformergases hergestellt werden, beispielsweise durch Veränderung von Druck, Temperatur, Zusammensetzung. Die Zusammensetzung kann beispielsweise durch Zufuhr anderer Gase - wie beispielsweise Erdgas - verändert werden, durch Abtrennung von Gaskomponenten, durch Reaktionen im Reformergas - solche Reaktionen können beispielsweise durch Druck- oder Temperaturänderung beziehungsweise durch Zufuhr anderer Gase hervorgerufen werden.

### Vorteilhafte Wirkungen der Erfindung

Erfindungsgemäß wird bei der Zubereitung des Reduktionsgases zumindest ein Vorläufergas mittels elektrischer Energie aufgeheizt; es kann sich dabei um das auf dem Reformergas basierende Vorläufergas handeln oder um ein anderes Vorläufergas.
Das hat den Vorteil, dass zur Temperaturerhöhung kein

Sauerstoff oder Verbrennungsprodukte eingebracht werden, und damit verbundene Probleme hinsichtlich Oxidation reduzierender Gaskomponenten oder Änderung der Gaszusammensetzung vermieden werden. Im Vergleich zu sauerstoffbasierten Verfahren zur Temperaturerhöhung kann die Leistung einer Direktreduktionsanlage deutlich vergrößert werden, da keine reduzierenden Gaskomponenten zur Temperaturerhöhung verbraucht werden. Je niedriger die Temperatur des Vorläufergases ist, desto ausgeprägter ist dabei der Vorteil einer elektrischen Aufheizung: bei einer größeren Differenz zu einer angestrebten Endtemperatur muss bei niedrigerer Vorläufergastemperatur mehr Gas verbrannt werden, um durch die Verbrennung die Temperatur entsprechend zu erhöhen - es würden also mehr reduzierende Gaskomponenten im Vorläufergas oxidiert werden, was das Reduktionspotential für Metalloxide verringert.
Auch die Sicherheit wird erhöht, weil sich keine explosionsfähigen Mischungen mit Sauerstoff bilden können. Die elektrische Aufheizung kann auch dazu führen, dass chemische Reaktionen rascher ablaufen und sich neue Gasgleichgewichte einstellen. Es können auch Plasma oder Radikale gebildet werden, die besonders reaktiv sind; gegebenenfalls wird dabei auch die Zusammensetzung eines Plasma-Trägergases durch chemische Reaktionen und/oder Moleküldissoziation verändert.

Bei elektrischer Aufheizung von auf dem Reformergas basierenden Vorläufergas nach Reformierung, beziehungsweise bei elektrischer Aufheizung eines anderen Vorläufergases, kann der Reformerbetrieb optimiert werden, ohne dass damit gegebenenfalls verbundene geringere Temperatur des Reformergases sich auf die Produktivität der Direktreduktion negativ auswirkt. Für verbesserte Produktivität der Direktreduktion günstige Änderungen der Temperatur und auch der Zusammensetzung des Reduktionsgases können nach der Reformierung durchgeführt werden. Der Reformer muss also beispielsweise nicht jenseits von für seine Funktion und günstigen Standzeiten optimalen Temperaturen betrieben werden, um eine gewünschte Reduktionsgastemperatur oder -zusammensetzung sicherzustellen. Stattdessen kann der Reformer schonend betrieben werden, was seine Lebensdauer, im speziellen der Reformerrohre, aufgrund geringeren Kriechens in Längs- und Durchmesserrichtung der Reformerrohre, beziehungsweise die Lebensdauer des Katalysators im Reformer verlängert. Das steigert die Wirtschaftlichkeit des Verfahrens zur Direktreduktion. Vermindertes Temperaturniveau im Reformer führt auch zu verminderter Temperatur des Reformerabgases und vermindertem Brennstoffbedarf; der damit verbundene geringere Energieverlust des Verfahrens steigert die Wirtschaftlichkeit.

Schonende Fahrweise eines katalytischen Reformers bei vermindertem Temperaturniveau kann zu einer eine optimale Direktreduktion nicht unterstützenden Zusammensetzung des Reformergases führen; speziell hinsichtlich CH₄-Schlupf und CO₂-Gehalt im Reformergas.
Durch Aufheizung mittels elektrischer Energie kann beispielsweise die - aufgrund von CH₄-Schlupf und damit verbundenem höheren CH₄-Gehalt im Reduktionsgas - verminderte Leistung bei der Reduktion kompensiert werden. Elektrische Aufheizung für ein solches Reformergas hat den Vorteil, dass das Reduktionspotential nicht auch noch durch Umsetzung reduzierender Gaskomponenten zwecks Aufheizung vermindert wird.
Ebenso kann alterungsbedingte Degradierung beziehungsweise Deaktivierung des Katalysators im Reformer durch die elektrische Aufheizung teilweise kompensiert werden, und dadurch die Notwendigkeit von aufwändigem und teurem Austausch des Katalysatormaterials hinausgezögert werden.

Vorteilhaft ist es auch, dass durch die Entkopplung der Temperatur des Reduktionsgases von der Temperatur des Reformergases einfach und schnell die beste Temperatur für die jeweils vorliegenden Metalloxide und die aktuelle Coatingmenge eingestellt werden kann. Der Regelbereich der elektrischen Aufheizung ist größer und die Regelung ist schneller im Vergleich zu einer Beeinflussung im Reformer. Der Betrieb der Reformierung und der Betrieb der Direktreduktion können so unabhängig voneinander optimiert werden, was das Verfahren insgesamt wirtschaftlicher macht. Im Vergleich zu Erhitzung mittels Verbrennung mit partieller Oxidation ist elektrische Erhitzung schneller und genauer regelbar, da nicht auf Verbrennungsreaktionen Rücksicht genommen werden muss. Im Vergleich zu Erhitzung mittels indirekter Aufheizung über Wärmetauscher ist elektrische Erhitzung schneller und genauer regelbar.

Speziell bei Inbetriebnahme einer Direktreduktionsanlage zur Durchführung des erfindungsgemäßen Verfahrens ist die erfindungsgemäße elektrische Aufheizung günstig. Sie eröffnet die Möglichkeit, in einem Reduktionsgas, das nur oder auch auf einem Reformergas basiert, in dem noch wenige Bestandteile reformiert sind - weil der Reformer bei der Inbetriebnahme noch nicht in vollem Umfang arbeitet -, durch schnell regelbare Temperaturerhöhung in-situ-Reformierung vor und/oder nach Kontakt mit den Metalloxiden zu begünstigen.

Nach einer Variante wird zumindest eine Teilmenge der elektrischen Energie direkt in das mittels elektrischer Energie aufzuheizende Vorläufergas eingebracht, beispielsweise mittels Widerstandsheizung mit Heizspirale, Lichtbogen zwischen Elektroden. Direkte Einbringung hat den Vorteil, dass der Wirkungsgrad sehr hoch ist. Das hat auch den Vorteil, dass bei der Einbringung der Energie stofflich nichts hinzufügt wird. Einfluss auf die stoffliche Zusammensetzung des Reduktionsgases kann bestehen, da der Energieeintrag die Kinetik chemischer Reaktionen von im Vorläufergas vorhandenen Komponenten miteinander beeinflusst, beziehungsweise beispielsweise an Elektrodenoberflächen Umsetzungen von im Vorläufergas vorhandenen Komponenten ablaufen.

Nach einer Variante wird zumindest eine Teilmenge der elektrischen Energie mittels Trägermedium, bevorzugt mittels Plasma, in das Vorläufergas eingebracht. Dabei kann die stoffliche Zusammensetzung des Reduktionsgases beeinflusst werden durch entsprechende Zusammensetzung des Trägermediums. Das Trägermedium kann Gas und/oder Flüssigkeit - beispielsweise Erdöl - und/oder Feststoff sein. Das Trägermedium ist bevorzugt frei von molekularem Sauerstoff.

Wenn es sich um ein Plasma handelt, das mit einem Trägergas betrieben wird, ist es eine bevorzugte Variante, dass zumindest ein Teil des Trägergases ein Mitglied der folgenden Gruppe von Bestandteilen ist:
- ein durch katalytische Reformierung von kohlenwasserstoffhaltigem Gas in einem Reformer erhaltenes Reformergas,
- eine nicht reformierte Teilmenge eines für die Reformierung vorgesehenen kohlenwasserstoffhaltigen Gases,
- Wasserstoff H₂,
- Kohlenmonoxid CO,
- kohlenwasserstoffhaltige Gase, wie beispielsweise auf Basis LPG, PAH, BTEX, CH₄, CmHn, Erdgas, und/oder eine Mischung aus diesen Gasen,
- ein aus einem Reduktionsaggregat, in dem die Metalloxide reduziert werden, abgezogenes Topgas, oder aus dem bei Durchführung des erfindungsgemäßen Verfahrens aus dem Reduktionsaggregat, in dem die Metalloxide direktreduziert werden, abgezogenes Topgas,
- Inertgase, wie beispielsweise N2, Ar.

Das Trägergas wird nämlich durch die hohen Temperaturen im Plasmabrenner zumindest teilweise dissoziieren und bei der Mischung mit dem Vorläufergas normalerweise teilweise wieder rekombinieren. Durch geeignetes Wählen des Trägergases können zusätzliche reduzierende Gaskomponenten wie CO oder H₂ entstehen. Einige Plasmakomponenten - wie beispielsweise atomarer Wasserstoff H - reagieren auch sehr schnell mit Metalloxid, bevorzugt Eisenoxid. Besonders bevorzugt sind Trägergase, welche nach der Mischung zusätzliche reduzierende Verbindungen nach der Rekombination erzeugen oder im Plasmazustand sehr schnell mit dem Metalloxid, bevorzugt Eisenoxid, reagieren.

Grundsätzlich kann ein Trägergas ein Prozessgas - Erdgas eingeschlossen - oder ein Abgas aus einem Verfahren zur Direktreduktion oder aus dem erfindungsgemäßen Verfahren zur Direktreduktion - beispielsweise Topgas aus dem Reduktionsaggregat, also beispielsweise einem Reduktionsschacht oder einem Wirbelschichtaggregat- sein, oder es kann ein Gas aus einer externen Gasquelle - beispielsweise ein Koksofengas COG, Biogas, LNG, Gas auf Basis LPG - sein, wobei diese Gase gekühlt oder vorgewärmt, gereinigte oder ungereinigt eingesetzt werden können. Es kommen in Frage H₂- und/oder CO- und/oder CO₂- und/oder H₂O-haltige und/oder CH₄-haltige Gase und/oder andere kohlenwasserstoffhaltige Gase, gekühlte oder vorgewärmte Gase, gereinigte oder ungereinigte Gase.

Durch die Wahl des Trägermediums kann Einfluss auf die Zusammensetzung des Reduktionsgases ausgeübt werden, da das Trägermedium selbst auch Komponenten zum Reduktionsgas liefern kann. Beispielsweise kann ein gereinigtes Topgas alleine oder in Mischung mit anderen Trägermedien, beispielsweise Koksofengas COG, als Trägermedium genutzt werden. Temperaturen in einem Plasma sind in der Regel sehr hoch. Wenn Verbindungen, deren thermische Zerstörung erwünscht ist, Teil des Trägermediums sind, lässt sich einerseits der Nutzen ihrer thermischen Zerstörung ziehen. Andererseits können Zerstörungsprodukte als reduzierende Gaskomponenten, oder als Vorprodukte für reduzierende Gaskomponenten, des Reduktionsgases genutzt werden. Besonders vorteilhaft ist es auch, Verbindungen, die in einem Reformer schwierig zu reformieren sind, nicht dem Reformer zuzuführen, sondern als Bestandteil des Trägermediums zu nutzen, um Zerstörungsprodukte als reduzierende Gaskomponenten, oder als Vorprodukte für reduzierende Gaskomponenten des Reduktionsgases einer Nutzung zuzuführen. Es kann beispielsweise sein, dass Erdgas höhere Kohlenwasserstoffe beinhaltet, die vor Reformierung in einem Reformer abgetrennt werden müssen. Solche abgetrennten Komponenten können dann als Trägermedien oder Teile davon genutzt werden.

Bevorzugt ist es, als Trägergas Gase beziehungsweise Gasmischungen zu verwenden, deren Einsatz Rußbildung vermeidet. Dazu wird das Verhältnis von kohlenstoffbeziehungsweise kohlenwasserstoffhaltigen Gasbestandteilen zu oxidierenden Gasbestandteilen, wie beispielsweise CO₂, H₂O, sowie die elektrische Leistung und die Größe der Trägermedien- beziehungsweise Gasströme entsprechend kontrolliert.

Der hohe Bedarf elektrischer Energie zum Betrieb von Plasmabrennern würde erwarten lassen, dass Einsatz von Plasmabrennern zur elektrischen Aufheizung des Vorläufergases wirtschaftlich nicht tragbar ist. Es zeigt sich nun unerwarteterweise, dass sich auch bei elektrischer Aufheizung mittels Plasma bei der Verfahrensführung der Direktreduktion im höheren Temperaturbereich wirtschaftlich günstige Ergebnisse erzielen lassen.

Nach einer Variante wird für elektrische Aufheizung vorgesehenes Vorläufergas vor der Aufheizung mittels elektrischer Energie bereits auf andere Weise aufgeheizt, bevorzugt auf zumindest 700 °C, besonders bevorzugt auf zumindest 750 °C. Im Falle von Reformergas als Vorläufergas ist die elektrische Aufheizung also in Flussrichtung des Reformergases nach dem Reformer und nach einer anderen - nicht elektrischen - Aufheizmethode angeordnet, um beispielsweise die Temperaturbegrenzung dieser anderen Aufheizmethode zu umgehen oder die Lebensdauer/Wirtschaftlichkeit dieser anderen Aufheizmethode zu erhöhen.

Nach einer Variante wird für elektrische Aufheizung vorgesehenes Vorläufergas mittels elektrischer Energie auf über 800°C, bevorzugt auf über 900°C, aufgeheizt. Bei Eisenoxiden laufen die Reduktionsreaktionen dann mit wirtschaftlich zufriedenstellender Effizienz ab. Weiters können dadurch auch kostengünstige Eisenoxide mit geringem Reduzierverhalten/geringer Reduzierbarkeit wirtschaftlich eingesetzt werden, weil die Leistungssteigerung durch Temperaturerhöhung für niedrigreduzierbare Stoffen sogar deutlich höher ist.

Das Reduktionsgas wird in ein die zu reduzierenden Metalloxide enthaltendes Reduktionsaggregat - beziehungsweise in die Metalloxide im Reduktionsaggregat - eingeleitet. Im Falle eines Reduktionsschachtes also beispielsweise in ein die Metalloxide enthaltendes Materialbett im Reduktionsschacht, und im Falle eines Wirbelschichtaggregates in eine die Metalloxide enthaltende Wirbelschicht im Wirbelschichtaggregat.

Nach einer Variante beträgt die Temperatur des Reduktionsgases bei der Einleitung zumindest über 800 °C, bevorzugt zumindest über 900°C, besonders bevorzugt zumindest 940°C, und bis zu 1100°C, bevorzugt bis zu 1050°C, besonders bevorzugt bis zu 1000°C. Bei Eisenoxiden laufen die Reduktionsreaktionen in einem Temperaturbereich dann mit wirtschaftlich zufriedenstellender Effizienz ab. Grundsätzlich soll die Temperatur im Reduktionsaggregat - also beispielsweise einem Reduktionsschacht oder einem Wirbelschichtaggregat - für die Direktreduktion möglichst hoch sein, allerdings wird der verwendbare Bereich nach oben durch das Agglomerationsverhalten - Sticking, Clustering - der Metalloxide, beispielsweise Eisenoxide, begrenzt. Außerdem kann höhere Temperatur bei entsprechender Zusammensetzung des Reduktionsgases dazu beitragen, dass im Reduktionsaggregat Gaskomponenten in-situ reformiert werden. Dies bewirkt eine Erhöhung der Reduktionsgasmenge verbunden mit einer Erhöhung der Reduktanten und damit eine höhere Anlagenleistung und/oder eine Entlastung des katalytischen Reformers und/oder eine höhere Reduktion der Metalloxide.

Zumindest ein Vorläufergas basiert auf dem Reformergas, das heißt, es kann neben dem Reformergas auch andere Bestandteile umfassen. Neben Reformergas kann dieses Vorläufergas nach einer Variante des erfindungsgemäßen Verfahrens auch Hüttenwerksgase - wie beispielsweise Koksofengas, COREX / FINEX Exportgas - und/oder anderen CO Kohlenmonoxid - und/oder H₂ Wasserstoff - und/oder Kohlenwasserstoff- hältige, allgemein CmHn-hältige, Gase - wie beispielsweise aliphatische Kohlenwasserstoffe wie Methan, auf Basis Liquefied Petroleum Gas (LPG) und/oder aromatische Kohlenwasserstoffe wie Benzol, Toluol, polyzyklische Kohlenwasserstoffe - umfassen. Diese spielen dann zusätzlich zum Reformergas bei der Bereitung des Reduktionsgases ebenfalls eine Rolle und können zur Erhöhung seines Reduktionspotentials beitragen. Beispielsweise können sie im Reduktionsaggregat - also beispielsweise einem Reduktionsschacht oder einem Wirbelschichtaggregat - in-situ reformiert und dadurch für die Reduktion genutzt werden.

Nach einer Variante wird einem Vorläufergas, beispielsweise dem auf dem Reformergas basierende Vorläufergas, das mittels elektrischer Energie aufgeheizt wird, kohlenwasserstoffhaltiges, allgemein CmHn haltiges - wie beispielsweise aliphatische Kohlenwasserstoffe wie Methan, Gas auf Basis Liquefied Petroleum Gas (LPG) und/oder aromatische Kohlenwasserstoffe wie Benzol, Toluol, polyzyklische Kohlenwasserstoffe -, Zusatzgas zugegeben vor und/oder während und/oder nachdem mittels elektrischer Energie aufgeheizt wird. Dann spielt dieses Zusatzgas bei der Bereitung des Reduktionsgases ebenfalls eine Rolle und kann zur Erhöhung seines Reduktionspotentials beitragen. Außerdem kann der Kohlenstoffgehalt im Produkt der Direktreduktion - bei Eisenoxiden beispielsweise DRI direct reduced iron - durch Erhöhung des Kohlenwasserstoffgehaltes im Reduktionsgas eingestellt werden.

Das Reduktionsgas wird in ein die zu reduzierenden Metalloxide enthaltendes Reduktionsaggregat eingeleitet - im Falle eines Reduktionsschachtes also beispielsweise in ein die Metalloxide enthaltendes Materialbett im Reduktionsschacht, und im Falle eines Wirbelschichtaggregates in eine die Metalloxide enthaltende Wirbelschicht im Wirbelschichtaggregat.

Nach einer bevorzugten Variante wird zumindest eine Teilmenge des kohlenwasserstoffhaltigen Zusatzgases in-situ reformiert, bevor das Reduktionsgas in ein die Metalloxide enthaltendes Reduktionsaggregat eingeleitet wird. Dadurch entstehen zusätzliche reduzierende Gaskomponenten. Die in situ Reformierung erfolgt also beispielsweise, bevor in ein die Metalloxide enthaltendes Materialbett in einem Reduktionsschacht eingeleitet wird, oder bevor in eine die Metalloxide enthaltende Wirbelschicht in einem Wirbelschichtaggregat eingeleitet wird.
Schonende Fahrweise eines katalytischen Reformers bei vermindertem Temperaturniveau und/oder der Betrieb des Reformers mit degradierten/deaktivierten Katalysator kann zu einer eine optimale Direktreduktion nicht unterstützenden Zusammensetzung des Reformergases führen; speziell hinsichtlich CH₄-Schlupf und CO₂-Gehalt im Reformergas. Besonders dann ist es vorteilhaft, wenn durch, beispielsweise durch Zugabe von gegebenenfalls in-situ reformiertem Zusatzgas geförderte, Entkopplung der Zusammensetzung des Reduktionsgases von der Zusammensetzung des Reformergases die günstigste Zusammensetzung des Reduktionsgases für die jeweils vorliegenden Metalloxide eingestellt werden kann. Der Regelbereich ist größer und die Regelung ist schneller im Vergleich zu einer Beeinflussung durch die Betriebsweise der Reformierung, oder im Vergleich zu einer Beeinflussung durch Änderung des zu reformierenden Gases. Der Betrieb der Reformierung und der Betrieb der Direktreduktion können so unabhängig voneinander optimiert werden, was das Verfahren insgesamt wirtschaftlicher macht.
Endotherme in-situ Umsetzung von kohlenwasserstoffhaltigem Gas mit H₂O und CO₂ kann natürlich auch im Reduktionsaggregat - also beispielsweise einem Reduktionsschacht oder einem Wirbelschichtaggregat - ablaufen. Vor Eintritt in das Reduktionsaggregat kann sie stattfinden, wenn H₂O/CO₂ im Gas enthalten ist; im Reduktionsaggregat kann sie stattfinden, wenn H₂O/CO₂ als Reaktionsprodukte bei der Reduktion entstehen. Die Umsetzung läuft in Gegenwart eines metallisierten Eisenbettes verstärkt ab.

Nach einer bevorzugten Variante wird zumindest eine Teilmenge eines kohlenwasserstoffhaltigen Vorläufergases in situ reformiert, bevor das Reduktionsgas in ein die Metalloxide enthaltendes Reduktionsaggregat eingeleitet wird. Dadurch entstehen zusätzliche reduzierende Gaskomponenten. Die in situ Reformierung erfolgt also beispielsweise, bevor das Reduktionsgas in ein die Metalloxide enthaltendes Materialbett in einem Reduktionsschacht eingeleitet wird, oder bevor das Reduktionsgas in eine die Metalloxide enthaltende Wirbelschicht in einem Wirbelschichtaggregat eingeleitet wird.

Es kann bei der Zubereitung des Reduktionsgases ein auf dem Reformergas basierendes Vorläufergas mittels elektrischer Energie aufgeheizt werden.
Es können bei der Zubereitung des Reduktionsgases mehrere auf dem Reformergas basierende Vorläufergase mittels elektrischer Energie aufgeheizt werden.
Es kann bei der Zubereitung des Reduktionsgases auch ein auf dem Reformergas basierendes Vorläufergas mittels elektrischer Energie aufgeheizt werden, und ein oder mehrere weitere auf dem Reformergas basierende Vorläufergase nicht mittels elektrischer Energie aufgeheizt werden.
Es können bei der Zubereitung des Reduktionsgases auch ein oder mehrere Vorläufergase, die nicht auf dem Reformergas basieren, mittels elektrischer Energie aufgeheizt werden. Es können bei der Zubereitung des Reduktionsgases auch ein oder mehrere auf dem Reformergas basierende Vorläufergase, und zusätzlich auch ein oder mehrere andere Vorläufergase, die nicht auf dem Reformergas basieren, aufgeheizt werden mittels elektrischer Energie.

Nach einer Variante des erfindungsgemäßen Verfahrens wird der Volumenstrom zumindest eines der Vorläufergase geregelt.

Nach einer Variante des erfindungsgemäßen Verfahrens wird zur Direktreduktion von Metalloxiden zumindest ein Zusatzreduktionsgas verwendet. Zusatzreduktionsgas ist ein Gas, das zusätzlich zum Reduktionsgas in ein die zu reduzierenden Metalloxide enthaltendes Reduktionsaggregat - beispielsweise ein Reduktionsschacht oder ein Wirbelschichtaggregat - eingeleitet wird, um dort die Metalloxide zumindest teilweise zu reduzieren. Zusatzreduktionsgas kann beispielsweise ein Vorläufergas sein; beispielsweise ein Vorläufergas, das nicht mittels elektrischer Energie aufgeheizt wurde.
Zusatzreduktionsgas wird an einem anderen Ort als das Reduktionsgas in das Reduktionsaggregat eingeleitet.

Das zu reduzierende Material Metalloxide durchläuft das Reduktionsaggregat von einer Eingabeöffnung zu einer Entnahmeöffnung.
Nach einer Ausführungsform wird Zusatzreduktionsgas in Richtung des Materialflusses von Eingabeöffnung zu Entnahmeöffnung vor dem Reduktionsgas eingeleitet. Damit kann erreicht werden, dass das Zusatzreduktionsgas zur Reduktion der Metalloxide genutzt wird, bevor - in Richtung des Materialflusses gesehen - das Reduktionsgas auf das Material trifft.
Nach einer anderen Ausführungsform wird das
Zusatzreduktionsgas in Richtung des Materialflusses von Eingabeöffnung zu Entnahmeöffnung nach dem Reduktionsgas eingeleitet.

Das Reduktionsgas eignet sich aufgrund der mittels elektrischer Aufheizung erfolgten Temperaturerhöhung gut dazu, mit hoher Temperatur eingeleitet zu werden. Das ist besonders dann günstig, wenn neben Direktreduktion auch Aufkohlung des Materials im Reduktionsaggregat stattfindet. Aufkohlung - Einfügung von Kohlenstoff in elementarer Form, gebunden als Zementit (Fe₃C) oder in Form von gelösten Kohlenstoff - kann gegebenenfalls - beispielsweise bei Aufkohlung mit CH₄ Methan - aufgrund endothermer Reaktion zu Temperaturerniedrigung führen, was letztendlich kühleres Produkt bei der Entnahme aus dem Reduktionsaggregat bedeutet. Für weitere Verarbeitung des Produktes ist jedoch oft eine möglichst hohe Temperatur des Produktes gewünscht zwecks Verbesserung von Verarbeitbarkeit durch Heißkompaktierung und von Energiebilanz. Elektrische Aufheizung erlaubt es, Temperaturerniedrigung durch Aufkohlung auszugleichen, indem mit entsprechend höherer Temperatur Reduktionsgas eingeleitet wird - das Endprodukt kann dann trotz Aufkohlung mit der gewünschten Temperatur entnommen werden. Bei Verfahren zur Aufheizung des Reduktionsgases, die auf Oxidation mit Sauerstoff und damit verbunden mit Verminderung der Reduktionskraft des Reduktionsgases basieren, würde eine entsprechend hohe Aufheizung einen wirtschaftlich inakzeptabel hohen Verlust an Reduktionskraft - und damit höheren Reduktionsgasverbrauch - bedeuten.

Ein weiterer Gegenstand der vorliegenden Anmeldung ist eine Vorrichtung zur Direktreduktion von Metalloxiden mittels eines Reduktionsgases,
umfassend
einen katalytischen Reformer zur Herstellung eines Reformergases,
eine Reformergasleitung zur Ausleitung von Reformergas aus dem katalytischen Reformer,
ein Reduktionsaggregat,
eine Reduktionsgasleitung zur Einleitung von Reduktionsgas in das Reduktionsaggregat,
dadurch gekennzeichnet, dass
die Vorrichtung zumindest eine Vorläufergasleitung umfasst, und zumindest eine Vorläufergasleitung eine elektrische Gasheizvorrichtung umfasst,
und zumindest eine Vorläufergasleitung von der Reformergasleitung ausgeht,
und jede Vorläufergasleitung in die Reduktionsgasleitung mündet.

Es kann eine Vorläufergasleitung vorhanden sein oder mehrere Vorläufergasleitungen. Vorläufergasleitungen dienen zur Zufuhr von Vorläufergas in die Reduktionsgasleitung.
Die Vorläufergasleitungen münden in die Reduktionsgasleitung. Zumindest eine Vorläufergasleitung geht von der Reformergasleitung aus.
Zumindest eine der vorhandenen Vorläufergasleitungen umfasst eine elektrische Gasheizvorrichtung, wobei "eine" in "eine elektrische Gasheizvorrichtung" nicht Zahlwort, sondern unbestimmter Artikel ist - Vorläufergasleitungen können jeweils eine einzige oder mehrere elektrische Gasheizvorrichtungen umfassen.

Das Reduktionsaggregat ist beispielsweise ein Reduktionsschacht oder ein Wirbelschichtaggregat. In einem Reduktionsschacht befindet sich ein festes, die Metalloxide umfassendes Materialbett; in einem Wirbelschichtaggregat befindet sich eine die Metalloxide enthaltende Wirbelschicht.

Im katalytischen Reformer wird durch katalytische Reformierung von kohlenwasserstoffhaltigem Gas Reformergas erhalten. Dieses wird über die Reformergasleitung aus dem katalytischen Reformer ausgeleitet und in zumindest eine Vorläufergasleitung eingeleitet.

In elektrischen Gasheizvorrichtungen wird Vorläufergas mittels elektrischer Energie aufgeheizt.

Das Reduktionsgas basiert auf Vorläufergas. Jede Vorläufergasleitung mündet in die Reduktionsgasleitung, über die das Reduktionsgas in das Reduktionsaggregat einleitet wird - das Reduktionsgas wird also auf allen Vorläufergasen basieren, die durch die entsprechenden Vorläufergasleitungen in die Reduktionsgasleitung eingeleitet werden. Im Reduktionsaggregat werden die Metalloxide mittels des Reduktionsgases direktreduziert.

Es kann beispielsweise eine einzige Vorläufergasleitung vorhanden sein; diese geht von der Reformergasleitung aus, mündet in die Reduktionsgasleitung, und umfasst zumindest eine elektrische Gasheizvorrichtung.
Es kann auch eine Vorläufergasleitung vorhanden sein, die von der Reformergasleitung ausgeht, keine elektrische Gasheizvorrichtung umfasst, und in die Reduktionsgasleitung mündet, sowie eine andere Vorläufergasleitung, die zumindest eine elektrische Gasheizvorrichtung umfasst und in die Reduktionsgasleitung mündet. Dabei kann die zweite Vorläufergasleitung beispielsweise von der Reformergasleitung ausgehen, oder von einer Reformerspeisleitung, durch die zu reformierendes Gas dem Reformer zugeführt wird.

Nach einer Variante mündet zumindest eine Zusatzgasleitung in zumindest eine Vorläufergasleitung. Wenn von der Vorläufergasleitung eine elektrische Gasheizvorrichtung umfasst ist, beispielsweise vor oder nach der elektrischen Gasheizvorrichtung, oder in die elektrische Gasheizvorrichtung. Zusatzgasleitungen dienen zur Zufuhr von Zusatzgas in Vorläufergas.

Nach einer Variante umfasst die eine elektrische Gasheizvorrichtung umfassende Vorläufergasleitung in Strömungsrichtung des Vorläufergases gesehen vor der elektrischen Gasheizvorrichtung eine nicht-elektrische Aufheizvorrichtung.

Nach einer Variante umfasst die Vorrichtung zur Direktreduktion zumindest eine Zusatzreduktionsgasleitung zur Einleitung von Zusatzreduktionsgas in das Reduktionsaggregat. Nach einer Variante geht zumindest eine Zusatzreduktionsgasleitung von einer Vorläufergasleitung aus. Bevorzugt umfasst die Vorrichtung zur Direktreduktion von Metalloxiden mittels eines Reduktionsgases zumindest eine Vorrichtung zur Regelung des Volumenstromes zumindest eines Vorläufergases.

Ein weiterer Gegenstand der vorliegenden Anmeldung ist eine Signalverarbeitungseinrichtung mit einem maschinenlesbaren Programmcode, dadurch gekennzeichnet, dass er Regelbefehle zur Durchführung eines erfindungsgemäßen Verfahrens aufweist.

Ein weiterer Gegenstand der vorliegenden Anmeldung ist ein maschinenlesbarer Programmcode für eine Signalverarbeitungseinrichtung, dadurch gekennzeichnet, dass der Programmcode Regelbefehle aufweist, welche die Signalverarbeitungseinrichtung zur Durchführung eines erfindungsgemäßen Verfahrens veranlassen.

Ein weiterer Gegenstand der vorliegenden Anmeldung ist ein Speichermedium mit einem darauf gespeicherten erfindungsgemäßen maschinenlesbaren Programmcode.

Die elektrische Gasheizvorrichtung kann beispielsweise mittels Widerstandsheizung über Heizspirale heizen, oder mittels Lichtbogen zwischen Elektroden.

Bevorzugt umfasst die elektrische Gasheizvorrichtung zumindest zwei Plasmabrenner, ganz besonders bevorzugt umfasst sie zumindest drei Plasmabrenner. Zumindest zwei Plasmabrenner sind unabhängig voneinander betreibbar. Plasmabrenner haben in der Regel bei Dauerbetrieb relativ geringe Standzeiten - die hohen Temperaturen des Lichtbogens und der Lichtbogen an sich beanspruchen besonders die Anode und Kathode des Plasmabrenners stark -, so dass sie oft gewartet beziehungsweise ausgetauscht werden müssen. Entsprechend wäre zu erwarten, dass bei Verfahrensführung mit einem Plasmabrenner kein wirtschaftlicher Betrieb möglich sei, da Austausch beziehungsweise Wartung des Plasmabrenners das Direktreduktionsverfahren unterbrechen würde. Wenn mehrere Plasmabrenner vorhanden sind, kann Wartung beziehungsweise Austausch eines Plasmabrenners erfolgen, während andere Plasmabrenner betrieben werden, so dass das Direktreduktionsverfahren nicht unterbrochen werden muss beziehungsweise Änderungen des Betriebes wie beispielsweise Leistungsreduktion des Direktreduktionsverfahrens nicht erforderlich sind.

Die elektrische Gasheizvorrichtung kann eine Heizkammer mit mehreren Plasmabrennern umfassen, oder mehrere Heizkammern mit jeweils einem oder mehreren Plasmabrennern.

Vorzugsweise umfasst die elektrische Gasheizvorrichtung zumindest eine Heizkammer mit einem Plasmabrenner, mit zumindest einer Ausleitöffnung zur Ausleitung von erhitztem Gas, und mit zumindest einer Einleitöffnung zur Einleitung von Vorläufergas, und mit zumindest einer Heizkammerlängswand in Längserstreckung von der Einleitöffnung zur Ausleitöffnung gesehen, wobei der Plasmabrenner mittig in der Heizkammer angeordnet ist, und wobei die Einleitöffnung zwischen Plasmabrenner und Heizkammerlängswand angeordnet ist. Durch diese Anordnung wird die hohe Wärmeübertragung - beispielsweise Wärmestrahlung und/oder Konvektion des Plasmagases - an die Heizkammerlängswand reduziert, weil das Vorläufergas eine geringere Temperatur als das aus dem Plasmabrenner austretende Gas aufweist. Zu hohe Wärmeübertragung an die Heizkammerlängswand kann zu einem hohen Verschleiß oder Beschädigung der Wände und somit der Heizkammer führen. Eine bevorzugte Variante ist, mehrere Einleitöffnungen vorzusehen, wobei beispielsweise zwischen allen Heizkammerlängswänden und dem Plasmabrenner Einleitöffnungen angeordnet sind.

Grundsätzlich kann auch vorgesehen werden, Einlassöffnungen für Kühlmedien - wie beispielsweise gegebenenfalls ausgemauerte Stutzen und Rohrleitungen zwischen Plasmabrenner und Heizkammerlängswänden vorzusehen, um einen direkten Kontakt von Plasma mit den Wänden zu verhindern. Solche Kühlmedien werden letztendlich mit aufgeheiztem Vorläufergas in das Reduktionsgas eingehen.

Vorzugsweise umfasst die elektrische Gasheizvorrichtung zumindest eine Heizkammer mit einem Plasmabrenner, mit zumindest einer Ausleitöffnung zur Ausleitung von erhitztem Gas, und mit zumindest einer Einleitöffnung zur Einleitung von Vorläufergas, und mit zumindest einer Heizkammerlängswand in Längserstreckung von der Einleitöffnung zur Ausleitöffnung gesehen, wobei die Einleitöffnung so angeordnet ist und die Heizkammer so ausgeformt ist, dass ein eingeleiteter Strom des Vorläufergases spiralförmig um den Plasmabrenner herum zwischen Plasmabrenner und Heizkammerlängswand von der Einleitöffnung zur Ausleitöffnung strömt. Auch durch diese Anordnung wird die hohe Wärmeübertragung - beispielsweise Wärmestrahlung und/oder Konvektion des Plasmagases - an die Wand der Heizkammer reduziert, weil das Vorläufergas eine geringere Temperatur als das aus dem Plasmabrenner austretende Gas aufweist. Zu hohe Wärmeübertragung an die Wand der Heizkammer kann zu einem hohen Verschleiß oder Beschädigung der Wände und somit der Heizkammer führen.

Vorzugsweise umfasst die Gasheizvorrichtung zumindest eine Heizkammer, in der mehrere Plasmabrenner vorhanden sind. Die Energie zum Heizen kann also an mehreren Stellen eingebracht werden. Dass hat den Effekt, dass die lokale Hitzebelastung der Heizkammer reduziert wird; statt die gesamte Energie an einer Stelle einzubringen, wird an mehreren Stellen jeweils weniger Energie eingebracht. Dadurch wird die lokale Temperaturbelastung auf eine größere Fläche aufgeteilt. Für die Anordnung der Plasmabrenner ist gibt es eine Vielzahl von Möglichkeiten. Insbesondere sind mögliche Anordnungsformen ringförmig, halb- oder teilkreisförmig radial um die Längsachse der Heizkammer angeordnet. Die Anordnung kann auch mehrere Ringe von Plasmabrennern in Richtung der Längsachse der Heizkammer hintereinander sein, oder auch nur einzelne Plasmabrenner in Richtung der Längsachse der Heizkammer hintereinander. Die Längsachse der Heizkammer ist in Richtung von einer Gaseinlassöffnung in die Brennkammer zu einer Gasauslassöffnung der Heizkammer; im Betrieb fließt das Vorläufergas von der Gaseinlassöffnung zur Gasauslassöffnung. Der Richtungsvektor der eintretenden Plasmabrennerströmung kann entweder axial oder zumindest teilweise axial und/oder tangential oder zumindest teilweise tangential zur Strömung des Vorläufergases von der Gaseinlassöffnung zur Gasauslassöffnung erfolgen. Dabei kann sie so gerichtet werden, dass die thermische Belastung der Brennkammer minimiert und/oder die Gasdurchmischung maximiert wird. Dabei können beispielsweise gezielt Tangentialströmung, Wirbelströmungen oder auch andere vorteilhafte Strömungsmuster erzielt werden.

Heizkammern sind üblicherweise mit Feuerfestmaterial ausgemauert. Vorzugsweise weist zumindest eine Heizkammer Kühlleitungen auf. So kann zumindest teilweise vor oder hinter Ausmauerungsmaterial oder anstelle Ausmauerungsmaterial mittel Kühlwasser, Dampf oder anderen Medien gekühlt werden.

### Kurze Beschreibung der Zeichnungen

Die Erfindung wird anhand schematischer beispielhafter Darstellungen von Ausführungsformen erläutert.
Figur 1 zeigt schematisch eine Ausführungsform eines erfindungsgemäßen Verfahrens und einer erfindungsgemäßen Vorrichtung zur Direktreduktion von Metalloxiden mittels eines Reduktionsgases.
Figuren 2a und 2b zeigen schematisch weitere Ausführungsformen in zu Figur 1 weitgehend analoger Darstellung.

Figuren 3a und 3b zeigen schematisch Längs- und Querschnitte durch eine Ausführungsform eines Teils einer elektrischen Gasheizvorrichtung.
Figur 4 zeigt schematisch einen Schnitt durch eine Ausführungsform eines Teils einer elektrischen Gasheizvorrichtung.
Figuren 5a bis 5i zeigen schematisch Varianten der Anordnung von Plasmabrennern in einer Heizkammer einer Gasheizvorrichtung.
Figur 6 zeigt schematisch eine weitere Ausführungsform weitgehend analog zu Figur 2a.

### Beschreibung der Ausführungsformen

### Beispiele

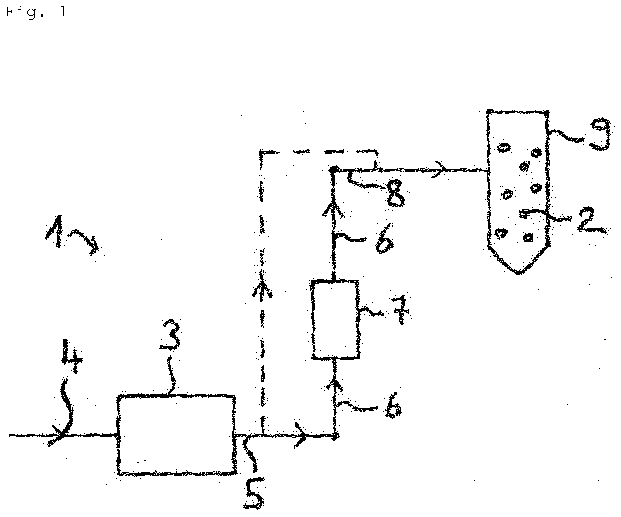

Figur 1 zeigt schematisch eine Ausführungsform einer erfindungsgemäße Vorrichtung zur Direktreduktion 1 von Metalloxiden 2 mittels eines Reduktionsgases.
In einem katalytischen Reformer 3 wird Reformergas hergestellt durch katalytische Reformierung von kohlenwasserstoffhaltigem Gas 4.
Das Reformergas wird durch die Reformergasleitung 5 aus dem katalytischen Reformer 3 ausgeleitet.
Von der Reformergasleitung 5 geht eine Vorläufergasleitung 6 aus. Die Vorläufergasleitung 6 umfasst eine elektrische Gasheizvorrichtung 7.
Das Vorläufergas basiert auf dem Reformergas und wird in der elektrischen Gasheizvorrichtung 7 mittels elektrischer Energie aufgeheizt. Die Vorläufergasleitung 6 mündet - in Strömungsrichtung vom Reformer weg gesehen hinter der elektrischen Gasheizvorrichtung 7 - in eine Reduktionsgasleitung 8. Diese mündet selber in ein Reduktionsaggregat 9, über sie wird Reduktionsgas in das Reduktionsaggregat 9 eingeleitet.
In dem Reduktionsaggregat 9 befinden sich die Metalloxide; im dargestellten Fall ist das Reduktionsaggregat 9 ein Reduktionsschacht, in dem ein festes, die Metalloxide umfassendes Materialbett liegt. Im Reduktionsaggregat 9 werden die Metalloxide 2 mittels des das Materialbett durchströmenden Reduktionsgases direktreduziert.
Optional kann die Reformergasleitung 5 auch zusätzlich eine Mündung in die Reduktionsgasleitung 8 aufweisen; das ist mit einer strichliert eingezeichneten Abzweigung von Reformergasleitung 5 dargestellt. Auf diese Weise kann etwas Reformergas im Bypass an der Gasheizvorrichtung 7 vorbei geführt und als Zusatzgas dem aufgeheizten Vorläufergas zugegeben werden.

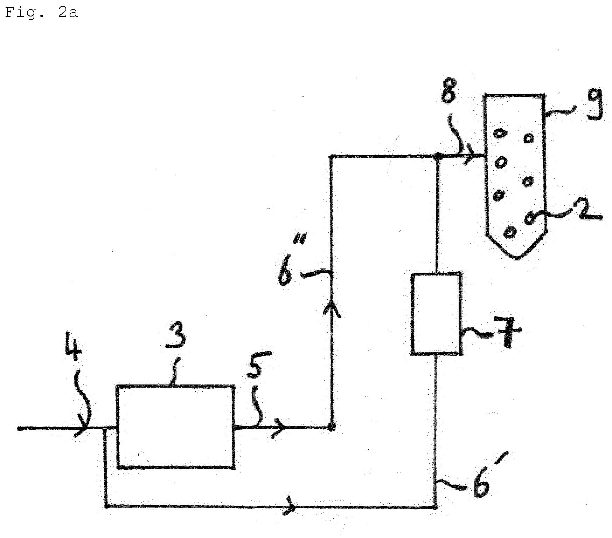

Figur 2a zeigt schematisch eine andere Ausführungsform in zu Figur 1 weitgehend analoger Darstellung. Gleiche Teile der Vorrichtung sind mit den gleichen Bezugszeichen wie in Figur 1 versehen. In einem katalytischen Reformer 3 wird Reformergas hergestellt durch katalytische Reformierung von kohlenwasserstoffhaltigem Gas 4. Kohlenwasserstoffhaltiges Gas 4 wird nicht nur in den Reformer 3 geleitet, sondern auch über die eine elektrische Gasheizvorrichtung 7 umfassende Vorläufergasleitung 6' in die Reduktionsgasleitung 8. Vom Reformer 3 geht eine Vorläufergasleitung 6" aus, die ebenfalls in die Reduktionsgasleitung 8 mündet, aber keine elektrische Gasheizvorrichtung umfasst. Das kohlenwasserstoffhaltige Gas 4, das bei der Zubereitung des Reduktionsgases als Vorläufergas dient, wird mittels elektrischer Energie aufgeheizt. Das Reformergas, das bei der Zubereitung des Reduktionsgases als Vorläufergas dient, wird nicht mittels elektrischer Energie aufgeheizt.
Es wäre grundsätzlich auch möglich, dass in Figur 2a auch die Vorläufergasleitung 6" eine elektrische Gasheizvorrichtung umfasst; das ist zur besseren Übersichtlichkeit nicht extra dargestellt.

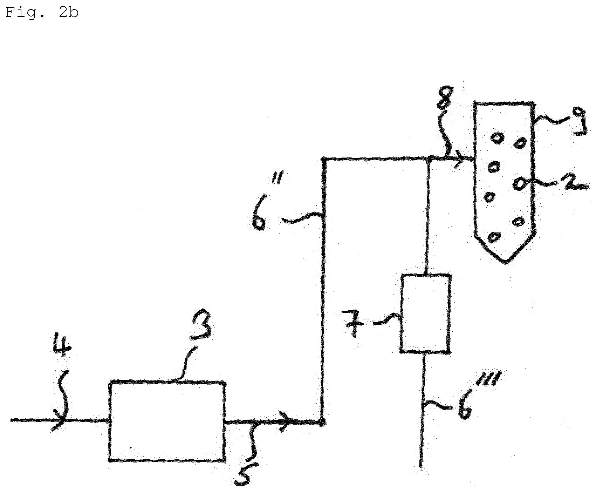

Figur 2b zeigt schematisch analog zu Figur 2a, wie Vorläufergasleitung 6''' eine elektrische Gasheizvorrichtung 7 umfasst, aber nicht wie Vorläufergasleitung 6' der Figur 2a das kohlenwasserstoffhaltiges Gas 4 leitet. In der Vorläufergasleitung 6''' wird ein anderes Vorläufergas als in der Vorläufergasleitung 6' der Figur 2a geleitet.
Grundsätzlich könnten in Figur 1 und in Figur 2a, 2b zwecks Zubereitung des Reduktionsgases auch noch weitere Vorläufergasleitungen vorhanden sein zur Zuführung weiterer Vorläufergase; das ist zur besseren Übersichtlichkeit nicht extra dargestellt.

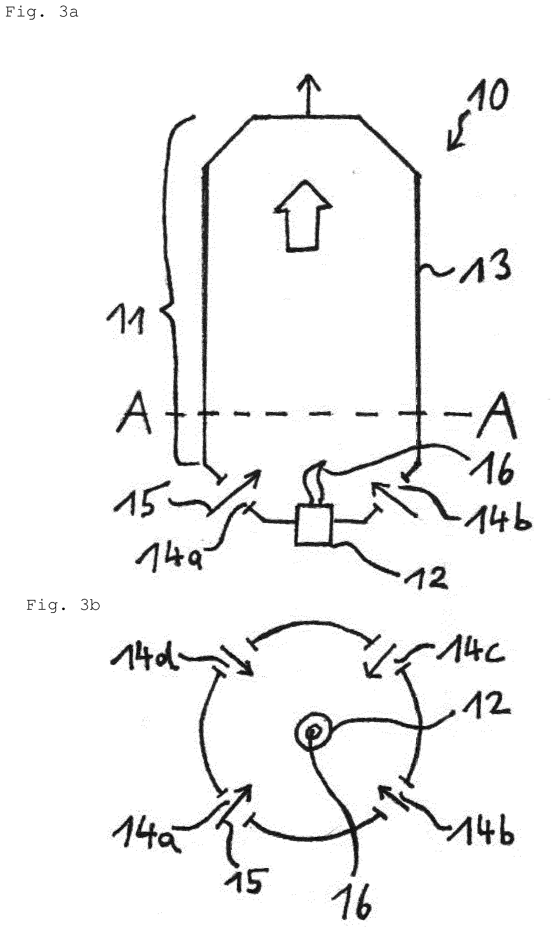

Figuren 3a und 3b zeigen Längs- und Querschnitte durch eine Ausführungsform eines Teils einer elektrischen Gasheizvorrichtung 10, die eine Heizkammer 11 mit einem Plasmabrenner 12 aufweist. Der Plasmabrenner 12 ist in der Heizkammer 11 mittig angeordnet. Das ist im Querschnitt entlang der Linie A-A aus Figur 3a in Figur 3b gut zu sehen. Die im dargestellten Beispiel zylinderförmig runde Heizkammer 11 wird durch die Heizkammerlängswand 13 begrenzt. Vorläufergas wird - als Pfeil dargestellt - durch die Einleitöffnungen 14a, 14b, 14c, 14d in die Heizkammer 11 eingeleitet. Erhitztes Gas - dargestellt durch einen Blockpfeil - wird durch eine nicht extra dargestellte Ausleitöffnung aus der Heizkammer 11 ausgeleitet - dargestellt durch einen Pfeil. Das Vorläufergas wird zwischen den Heizkammerlängswand 13 und dem Plasmabrenner 12 in die Heizkammer 11 eingeleitet. Der dargestellte Strom des Vorläufergases 15 von der Einleitöffnung 14a befindet sich somit zwischen dem Plasma 16 und Heizkammerlängswand 13. Es könnten auch mehrere solche Heizkammern mit je einem Plasmabrenner in der elektrischen Gasheizvorrichtung vorhanden sein.

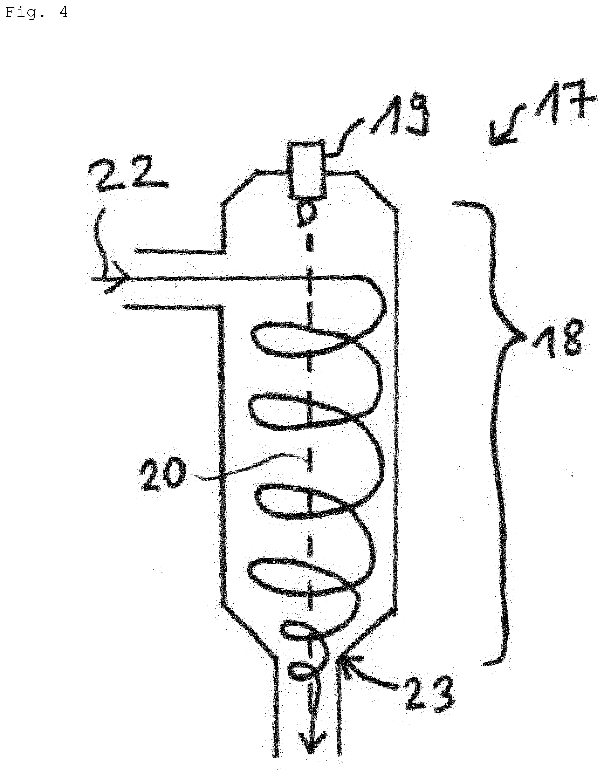

Figur 4 zeigt einen Schnitt durch eine Ausführungsform eines Teils einer elektrischen Gasheizvorrichtung 17, die eine Heizkammer 18 mit einem Plasmabrenner 19 aufweist. Die Heizkammer 18 ist im Wesentlichen zylinderförmig ausgeführt, wobei der Plasmabrenner 19 im Wesentlichen entlang der Zylinderachse 20 liegt. Durch eine Einleitvorrichtung 21 mit Einleitöffnung wird Vorläufergas 22 tangential in die Heizkammer 18 eingeleitet, und strömt nach der Einleitung um den Plasmabrenner 19 herum zur Ausleitöffnung 23. Durch die Ausleitöffnung 23 zum Ausleiten des erhitzten Gases verläuft die Zylinderachse 20 . Es könnten auch mehrere solche Heizkammern mit je einem Plasmabrenner in der elektrischen Gasheizvorrichtung vorhanden sein.

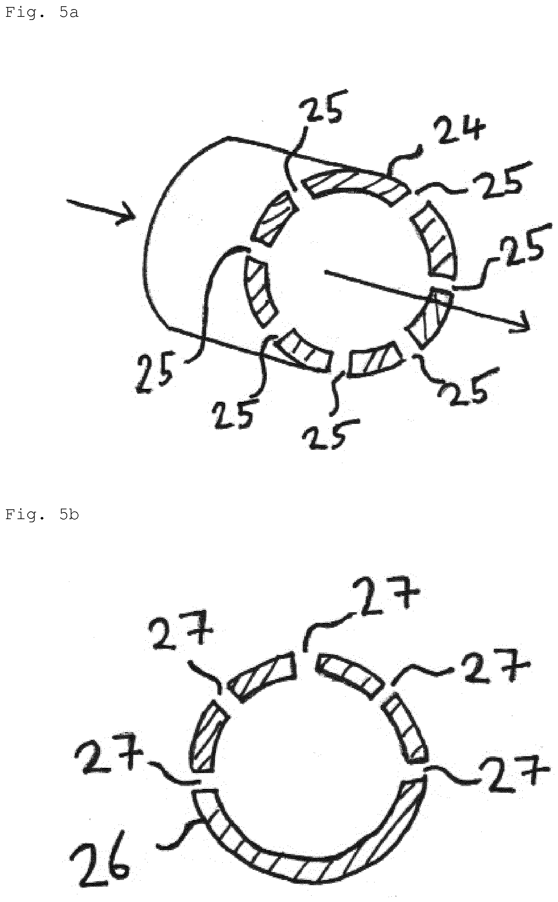

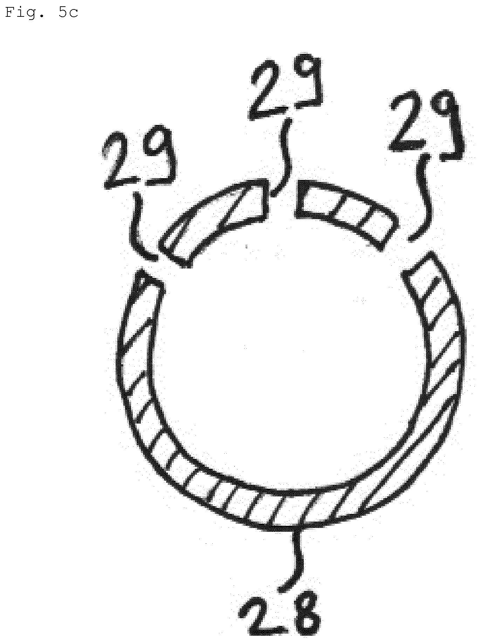

Figuren 5a - i zeigen Varianten der Anordnung von Plasmabrennern in einer Heizkammer einer Gasheizvorrichtung, in der mehrere Plasmabrenner vorhanden sind. Insbesondere sind mögliche Anordnungsformen ringförmig, halb- oder teilkreisförmig radial um die Längsachse der Heizkammer angeordnet, was in den Figuren 5a, 5b, 5c dargestellt ist. Figur 5a zeigt in Schrägansicht in einem Schnitt durch eine zylindrische Heizkammer 24 senkrecht zur Längsachse - die der Flussrichtung des zu erhitzenden Gases, mit Pfeilen angedeutet, entspricht - , wie ringförmig mehrere Öffnungen 25 zur Montage von Plasmabrennern vorhanden sind. Die Plasmabrenner können mit ihrer Längsachse beispielsweise senkrecht oder schräg zur Längsachse der Heizkammer 24 stehen. Figur 5b zeigt in einem Schnitt durch eine zylindrische Heizkammer 26 senkrecht zur Längsachse - die der Flussrichtung des zu erhitzenden Gases entspricht - , wie halbkreisförmig mehrere Öffnungen 27 zur Montage von Plasmabrennern vorhanden sind. Figur 5c zeigt in einem Schnitt durch eine zylindrische Heizkammer 28 senkrecht zur Längsachse - die der Flussrichtung des zu erhitzenden Gases entspricht - , wie halbkreisförmig mehrere Öffnungen 29 zur Montage von Plasmabrennern vorhanden sind.

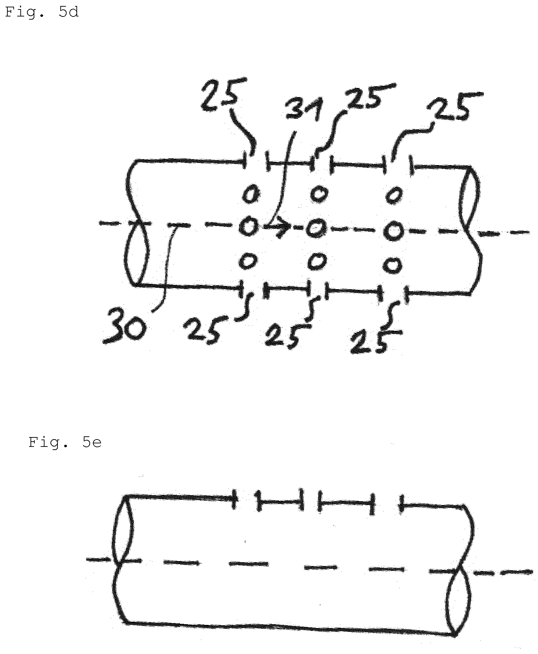

Figur 5d zeigt in einem Längsschnitt durch einen Abschnitt einer Heizkammer wie in Figur 5a, wie mehrere Ringe von Plasmabrennern installiert werden können; gezeigt sind die Öffnungen 25 zur Montage, die Längsachse 30 der Heizkammer und die Gasflussrichtung 31. Figur 5e zeigt das in entsprechender Ansicht für eine Anordnung, bei der nur jeweils ein Plasmabrenner pro Position entlang der Längsachse vorhanden ist.

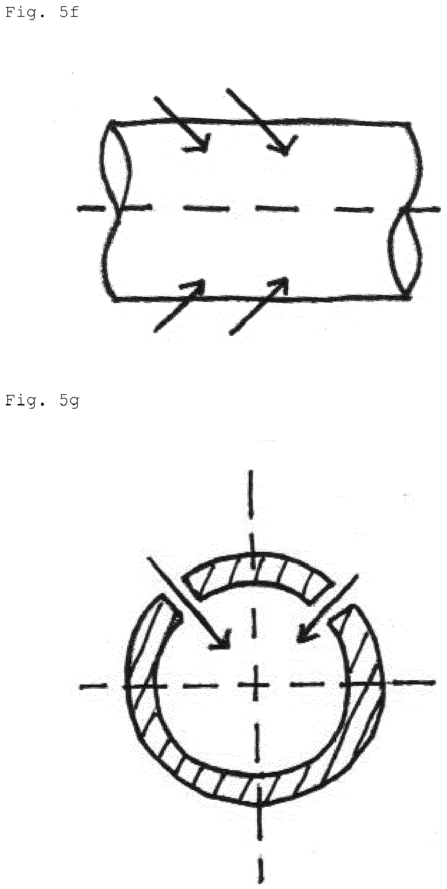

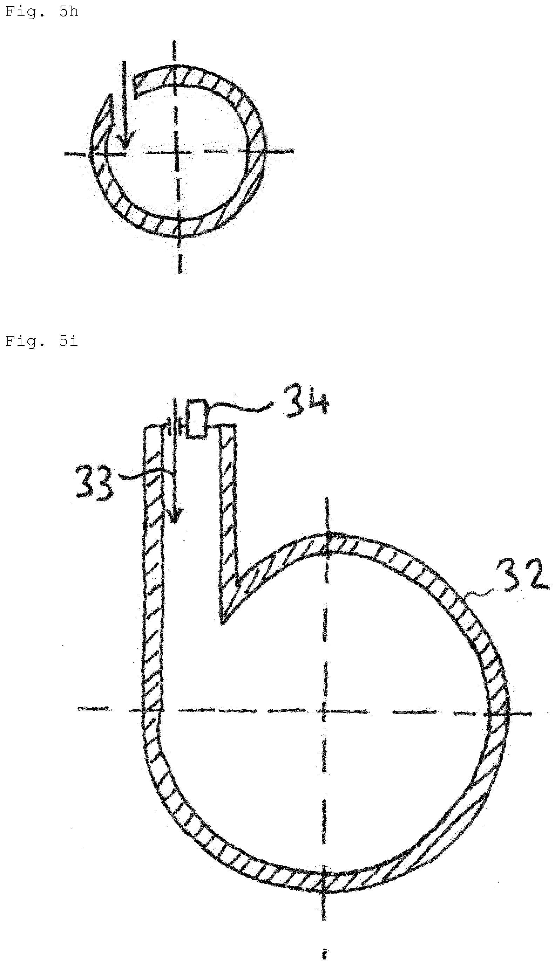

Figur 5f zeigt in entsprechender Ansicht ein Beispiel dafür, wie die Plasmabrenner bezüglich der Längsachse orientier sein können. Die Pfeile deuten an, dass die Plasmabrenner zur Längsachse geneigt sind. Figuren 5g und 5h zeigen in zu der Figur 5a weitgehend analoger Ansicht, dass die durch Pfeile angedeuteten Plasmabrenner auf das Zentrum des Gasstromes gerichtet sein können - in Figur 5g dargestellt -, oder praktisch tangential zur Gasströmung - in Figur 5h dargestellt. Der Richtungsvektor der eintretenden Plasmabrennerströmung - die den Pfeilrichtungen in den Figuren 5g und 5h entspricht - kann also zumindest teilweise axial und/oder zumindest teilweise tangential zur Strömung des Gases von der Gaseinlassöffnung zur Gasauslassöffnung erfolgen.
In Figur 5i ist schematisch anhand eines Schnittes senkrecht zur Längsachse einer Variante einer Heizkammer 32 gezeigt, wie der aufzuheizende Gasstrom 33 zwischen Plasmabrenner 34 und Wand der Heizkammer 32 eingebracht wird.

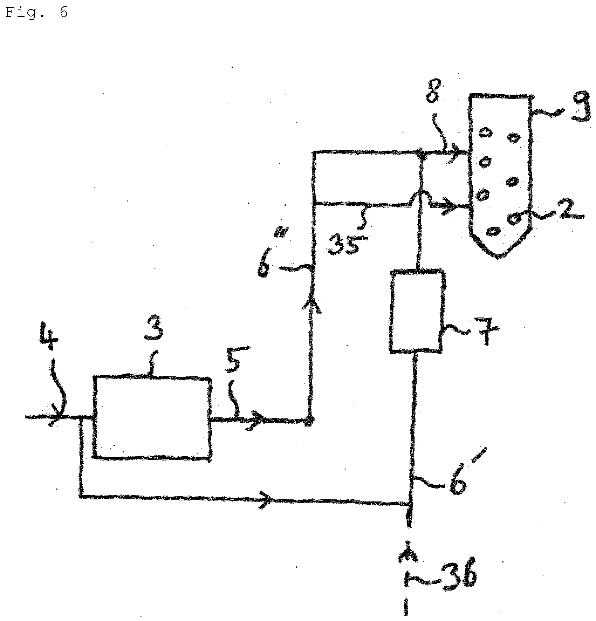

Figur 6 zeigt analog zu Figur 2a eine Ausführungsform einer erfindungsgemäße Vorrichtung, in der eine Zusatzreduktionsgasleitung 35 zur Einleitung von Zusatzreduktionsgas in das Reduktionsaggregat 9 vorhanden ist. Beispielhaft geht die Zusatzreduktionsgasleitung 35 von der Vorläufergasleitung 6" aus - Zusatzreduktionsgas ist demzufolge ein Vorläufergas, das nicht mittels elektrischer Energie aufgeheizt wurde, hier also Reformergas. Das Zusatzreduktionsgas wird zusätzlich zum Reduktionsgas in das Reduktionsaggregat eingeleitet wird.
Dargestellt ist auch strichliert die optional erfolgende Zugabe von Erdgas 36 in die Vorläufergasleitung 6" vor der elektrischen Gasheizvorrichtung. Erhitzt wird ein Vorläufergas, das eine Mischung aus Erdgas 36 und kohlenwasserstoffhaltigem Gas 4 ist.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Vorrichtung zur Direktreduktion
- 2: Metalloxide
- 3: Reformer
- 4: kohlenwasserstoffhaltiges Gas
- 5: Reformergasleitung
- 6,6',6",6''': Vorläufergasleitung
- 7: Gasheizvorrichtung
- 8: Reduktionsgasleitung
- 9: Reduktionsaggregat
- 10: Gasheizvorrichtung
- 11: Heizkammer
- 12: Plasmabrenner
- 13: Heizkammerlängswand
- 14a,14b,14c,14d: Einleitöffnungen
- 15: Vorläufergas
- 16: Plasma
- 17: Gasheizvorrichtung
- 18: Heizkammer
- 19: Plasmabrenner
- 20: Zylinderachse
- 21: Einleitvorrichtung
- 22: Vorläufergas
- 23: Ausleitöffnung
- 24: Heizkammer
- 25: Öffnungen zur Montage von Plasmabrennern
- 26: Heizkammer
- 27: Öffnungen zur Montage von Plasmabrennern
- 28: Heizkammer
- 29: Öffnungen zur Montage von Plasmabrennern
- 30: Längsachse
- 31: Gasflussrichtung
- 32: Heizkammer
- 33: aufzuheizender Gasstrom
- 34: Plasmabrenner
- 35: Zusatzreduktionsgasleitung
- 36: Erdgas

## Patentansprüche

1. Verfahren zur Direktreduktion von Metalloxiden (2) unter Verwendung eines Reduktionsgases,
das auf zumindest einem Vorläufergas basiert,
wobei zumindest ein Vorläufergas (15,22)
auf durch katalytische Reformierung von kohlenwasserstoffhaltigem Gas (4) in einem Reformer (3) erhaltenem Reformergas basiert,
**dadurch gekennzeichnet, dass**
bei der Zubereitung des Reduktionsgases zumindest ein Vorläufergas mittels elektrischer Energie aufgeheizt wird.

2. Verfahren nach Anspruch 1, **dadurch gekennzeichnet, dass** zumindest eine Teilmenge der elektrischen Energie mittels Trägermedium, bevorzugt mittels Plasma (16), in das Vorläufergas (15,22) eingebracht wird.

3. Verfahren nach Anspruch 1 oder 2, **dadurch gekennzeichnet, dass** für elektrische Aufheizung vorgesehenes Vorläufergas (15,22) vor der Aufheizung mittels elektrischer Energie bereits auf andere Weise aufgeheizt wird, bevorzugt auf zumindest 700 °C, besonders bevorzugt auf zumindest 750 °C.

4. Verfahren nach einem der Ansprüche 1 bis 3, **dadurch gekennzeichnet, dass** für elektrische Aufheizung vorgesehenes Vorläufergas (15,22) mittels elektrischer Energie auf über 800°C, bevorzugt auf über 900°C, aufgeheizt wird.

5. Verfahren nach einem der Ansprüche 1 bis 4, **dadurch gekennzeichnet, dass** die Temperatur des Reduktionsgases bei der Einleitung zumindest über 800 °C, bevorzugt zumindest über 900°C, besonders bevorzugt zumindest 940°C, und bis zu 1100°C, bevorzugt bis zu 1050°C, besonders bevorzugt bis zu 1000°C, beträgt.

6. Verfahren nach einem der Ansprüche 1 bis 5, **dadurch gekennzeichnet, dass** einem Vorläufergas (15,22), das mittels elektrischer Energie aufgeheizt wird, kohlenwasserstoffhaltiges Zusatzgas zugegeben wird vor und/oder während und/oder nachdem mittels elektrischer Energie aufgeheizt wird.

7. Verfahren nach einem der Ansprüche 1 bis 6, **dadurch gekennzeichnet, dass** zumindest eine Teilmenge des kohlenwasserstoffhaltigen Zusatzgases in-situ reformiert wird, bevor das Reduktionsgas in ein die Metalloxide (2) enthaltendes Reduktionsaggregat (9) eingeleitet wird.

8. Verfahren nach einem der Ansprüche 1 bis 7, **dadurch gekennzeichnet, dass** zumindest eine Teilmenge eines kohlenwasserstoffhaltigen Vorläufergases in situ reformiert wird, bevor das Reduktionsgas in ein die Metalloxide (2) enthaltendes Reduktionsaggregat (9) eingeleitet wird.

9. Verfahren nach einem der Ansprüche 1 bis 8, **dadurch gekennzeichnet, dass** zur Direktreduktion von Metalloxiden (2) zumindest ein Zusatzreduktionsgas verwendet wird.

10. Vorrichtung zur Direktreduktion (1) von Metalloxiden (2) mittels eines Reduktionsgases,
umfassend
einen katalytischen Reformer (3) zur Herstellung eines Reformergases,
eine Reformergasleitung (5) zur Ausleitung von Reformergas aus dem katalytischen Reformer (3),
ein Reduktionsaggregat (9),
eine Reduktionsgasleitung (8) zur Einleitung von Reduktionsgas in das Reduktionsaggregat (9),
**dadurch gekennzeichnet, dass**
die Vorrichtung zumindest eine Vorläufergasleitung (6,6',6",6''') umfasst,
und zumindest eine Vorläufergasleitung (6,6',6",6''') eine elektrische Gasheizvorrichtung (7,10,17) umfasst,
und zumindest eine Vorläufergasleitung (6,6',6",6''') von der Reformergasleitung (5) ausgeht,
und jede Vorläufergasleitung (6,6',6",6''') in die Reduktionsgasleitung (8) mündet.

11. Vorrichtung nach Anspruch 10, **dadurch gekennzeichnet, dass** die Vorrichtung zur Direktreduktion (1) zumindest eine Zusatzreduktionsgasleitung (35) zur Einleitung von Zusatzreduktionsgas in das Reduktionsaggregat (9) umfasst.

12. Vorrichtung nach Anspruch 10 oder 11, **dadurch gekennzeichnet, dass** die elektrische Gasheizvorrichtung (10) zumindest zwei Plasmabrenner umfasst, ganz besonders bevorzugt zumindest drei Plasmabrenner.

13. Vorrichtung nach einem der Ansprüche 10 bis 12, **dadurch gekennzeichnet, dass** die elektrische Gasheizvorrichtung (10) zumindest eine Heizkammer (11) mit einem Plasmabrenner (12) umfasst, mit zumindest einer Ausleitöffnung zur Ausleitung von erhitztem Gas, und mit zumindest einer Einleitöffnung (14a,14b) zur Einleitung von Vorläufergas (15), und mit zumindest einer Heizkammerlängswand (13) in Längserstreckung von der Einleitöffnung zur Ausleitöffnung gesehen, wobei der Plasmabrenner (12) mittig in der Heizkammer (11) angeordnet ist, und wobei die Einleitöffnung (14a,14b) zwischen Plasmabrenner (12) und Heizkammerlängswand (13) angeordnet ist.

14. Vorrichtung nach einem der Ansprüche 10 bis 12, **dadurch gekennzeichnet, dass** die elektrische Gasheizvorrichtung (17) zumindest eine Heizkammer (18) mit einem Plasmabrenner (19) umfasst, mit zumindest einer Ausleitöffnung (23) zur Ausleitung von erhitztem Gas, und mit zumindest einer Einleitöffnung zur Einleitung von Vorläufergas (22), und mit zumindest einer Heizkammerlängswand in Längserstreckung von der Einleitöffnung zur Ausleitöffnung (23) gesehen, wobei die Einleitöffnung so angeordnet ist und die Heizkammer (18) so ausgeformt ist, dass ein eingeleiteter Strom des Vorläufergases (22) spiralförmig um den Plasmabrenner (19) herum zwischen Plasmabrenner (19) und Heizkammerlängswand von der Einleitöffnung zur Ausleitöffnung (23) strömt.

15. Vorrichtung nach einem der Ansprüche 10 bis 14, **dadurch gekennzeichnet, dass** die Gasheizvorrichtung (7,10,17) zumindest eine Heizkammer, in der mehrere Plasmabrenner vorhanden sind, umfasst.
